# EUROPÄISCHE PATENTSCHRIFT

(11) **EP 3 962 646 B1**
(45) Veröffentlichungstag und Bekanntmachung des Hinweises auf die Patenterteilung: **10.05.2023**
(21) Anmeldenummer: 20732825.3
(22) Anmeldetag: 10.06.2020
(51) Int. Cl.: B01L 1/02, B65D 21/00, B65D 21/02

(54) **ERWEITERBARE VAKUUMKAMMER UND VERFAHREN ZUR HERSTELLUNG EINER ERWEITERBAREN VAKUUMKAMMER**
EXPANDABLE VACUUM CHAMBER AND METHOD OF MANUFACTURING AN EXPANDABLE VACUUM CHAMBER
CHAMBRE À VIDE EXTENSIBLE ET PROCÉDÉ DE FABRICATION D'UNE CHAMBRE À VIDE EXTENSIBLE

(30) Priorität: 11.06.2019 DE 102019208435
(43) Veröffentlichungstag der Anmeldung: 09.03.2022
(73) Patentinhaber: Diener, Christof, 72202 Nagold (DE)
(72) Erfinder: Diener, Christof, 72202 Nagold (DE)
(74) Vertreter: Kohler Schmid Möbus Patentanwälte
(86) Internationale Anmeldenummer: PCT/EP2020/066115
(87) Internationale Veröffentlichungsnummer: WO 2020/249626

(56) Entgegenhaltungen:
- JP-A- 2015 175 031
- US-A1- 2005 183 824
- US-A1- 2010 270 299
- US-A1- 2017 107 014

## Beschreibung

### Hintergrund der Erfindung

Die Erfindung betrifft eine erweiterbare Vakuumkammer sowie ein Verfahren zur Herstellung einer erweiterbaren Vakuumkammer.

Aus dem Stand der Technik sind im Wesentlichen zwei Grundvarianten von Vakuumkammern bekannt geworden. Die Vakuumkammer wird dabei entweder aus einem Vollmaterial-Rohling gefräst oder aus einzelnen quer zueinander angeordneten Platten zusammengeschweißt.

Die Herstellung einer Vakuumkammer aus einem Vollmaterial-Rohling bietet eine hohe Sicherheit hinsichtlich ungewollter Leckageöffnungen. Allerdings werden, insbesondere bei großen Vakuumkammern, hierfür sehr große Blöcke des zu verarbeitenden Materials benötigt, welche aufgrund ihres Gewichts schwer lieferbar und nur mit großen und teuren Fräsmaschinen weiterverarbeitbar sind. Daher wird für die Herstellung von Vakuumkammern dieser Art meistens Aluminium verwendet. Zudem entsteht bei der Herstellung der Vakuumkammer aus einem Vollmaterial-Rohling viel Abfall, was sich weiter ungünstig auf die Herstellungskosten auswirkt.

Für die Herstellung großer Vakuumkammern hat sich daher das Verschweißen von Platten und Rohren als Standard durchgesetzt. Hierbei fällt deutlich weniger Abfall an und die zu verschweißenden Einzelkomponenten sind in der Herstellung und Weiterverarbeitung einfacher zu handhaben. Allerdings stellen die notwendigen Schweißverbindungen ein Risiko hinsichtlich der ungewollten Leckageöffnungen dar.

In der Praxis treten mitunter Mischformen auf. Ein aus einem Vollmaterial-Rohling gefräster Rahmen bildet beispielsweise die tragende Struktur für daran angeschweißte oder angeschraubte Plattenwandungen aus. Zudem wird zur Herstellung großer Vakuumkammern auf eine Mehrzahl - untereinander fluidisch verbundener - kleinerer Vakuumkammern zurückgegriffen.

Die US 9,969,527 B2 beschreibt ein solches modulares Vakuumkammer-System, bestehend aus mehreren miteinander verbunden Kammervolumina. Die Rahmenstruktur der einzelnen Kammervolumina ist von würfelartiger Gestalt.

Obwohl sich die Herstellung großer Vakuumkammern aus einer Mehrzahl kleinerer Vakuumkammern als Standard etabliert hat, ist die Verarbeitung der Vollmaterial-Rohlinge weiterhin aufwändig und mit großem Materialabfall unter Verwendung teurer Fräsmaschinen verbunden. Die Alternative zur Herstellung einer Vakuumkammer durch Verschweißen von Platten erhöht dagegen das Risiko von ungewollten Leckageöffnungen.

### Aufgabe der Erfindung

Es ist daher Aufgabe der Erfindung, eine leckagesichere und erweiterbare Vakuumkammer unter Verwendung einfacher und kostengünstiger Platten-Rohlinge sowie günstiger Werkzeuge bereitzustellen und dabei den Materialabfall bei der Herstellung der Vakuumkammer zu reduzieren.

### Beschreibung der erfindungsgemäßen Vorrichtung

Diese Aufgabe wird erfindungsgemäß gelöst durch eine Vakuumkammer mit zwei Endplatten und wenigstens zwei plattenförmigen Rahmenelementen, wobei die Rahmenelemente jeweils
- umfänglich überwiegend geschlossen sind; und
- einen Rahmen-Innenbereich mit einer umlaufenden Wandung ausbilden;
- wodurch ein Teilvolumen der Vakuumkammer in Umfangsrichtung begrenzt wird; und
- eine umlaufende vorderseitige Rahmen-Kontaktfläche zur Anordnung eines weiteren Rahmenelements oder einer Endplatte aufweisen; und
- eine umlaufende rückseitige Rahmen-Kontaktfläche zur Anordnung eines weiteren Rahmenelements oder einer Endplatte aufweisen; und wobei
- die wenigstens zwei plattenförmigen Rahmenelemente zwischen den Endplatten angeordnet sind; und wobei
- die zwei Endplatten eine vorderseitige und/oder rückseitige Kontaktfläche zur Anordnung an einem Rahmenelement aufweisen; und
- das Kammervolumen in überwiegend axialer Richtung begrenzen.

Im Weiteren wird unter einer "axialen Richtung" eine Richtung quer zur plattenartigen Erstreckung der Rahmenelemente und Endplatten verstanden. Unter einer "Dicke" versteht sich eine Abmessung in Richtung der plattenartigen Erstreckung; unter einer "Stärke" versteht sich eine Abmessung quer zur Richtung der plattenartigen Erstreckung.

Die erfindungsgemäße Vakuumkammer wird überwiegend aus Platten-Rohlingen gefertigt, die in der Beschaffung sowie der Weiterverarbeitung deutlich günstiger sind als große und schwere Vollmaterial-Rohlinge. Hierbei kann auf besonders günstig gehandelte Standardmaße der Platten-Rohlinge zurückgegriffen werden. Die Platten-Rohlinge können zumindest eine Ausnehmung, insbesondere zumindest eine Durchgangsausnehmung, aufweisen. Herkömmliche Platten-Rohlinge weisen Plattenstärken von 10 bis 750 Millimetern, insbesondere 10 bis 500 Millimetern, besonders bevorzugt 10 bis 200 Millimetern auf. Aufgrund der geringeren Materialstärke können bei der Weiterverarbeitung der Platten-Rohlinge dahingehend leistungsschwächere und kostengünstigere Werkzeuge, insbesondere Fräsmaschinen, verwendet werden. Die Platten-Rohlinge können insbesondere als Halbzeug oder als Gussteil, besonders bevorzugt als Gussteil-Rahmen, ausgebildet sein.

Im Gegensatz zu den aus dem Stand der Technik bekannten, voluminös ausgebildeten Rahmenstrukturen kommen erfindungsgemäß flache, effektiv zweidimensionale, plattenartige Rahmenelemente zum Einsatz.

Das plattenartige Rahmenelement ist umfänglich überwiegend, insbesondere vollständig, geschlossen. Ein vollständig geschlossenes Rahmenelement weist die höchste Sicherheit in Bezug auf ungewollte Leckageöffnungen auf. Je nach Ausführung der späteren Vakuumkammer kann es jedoch erforderlich sein, Öffnungen und/oder Ausnehmungen zur fluidischen Verbindung mit dem Außenbereich im Rahmenelement vorzusehen.

Die Ausnehmungen können besonders kosteneffizient bereits während der Fertigung des Rahmenelements aus dem Platten-Rohling oder in einem anschließenden Schritt in das Rahmenelement eingearbeitet werden.

Bevorzugt sind derartige Ausnehmungen nicht als Durchgangsausnehmungen in Richtung der Rahmenstärke, sondern lediglich als Durchgangsausnehmungen in Richtung der Rahmendicke ausgeführt, um eine zu hohe Schwächung der Festigkeit des Rahmenelements zu vermeiden.

Das Rahmenelement bildet eine umlaufende Wandung und einen Rahmen-Innenbereich aus. Der Rahmen-Innenbereich bildet zusammen mit der Rahmenstärke ein Volumen aus, welches einem Teilvolumen der Vakuumkammer entspricht. Dieses Teilvolumen wird bei Teilbetrachtung eines Rahmenelements lediglich in Umfangsrichtung durch die Wandung des Rahmenelements begrenzt.

Zudem bildet das Rahmenelement eine vorderseitige und eine rückseitige umlaufende Kontaktfläche aus. Mit anderen Worten bildet das Rahmenelement diese Kontaktflächen in axialer Richtung aus. Die Ausbildung derartiger Kontaktflächen ermöglicht die Anordnung weiterer Rahmenelemente und/oder Endplatten an dem Rahmenelement.

Die erfindungsgemäße Vakuumkammer weist zwei Endplatten und wenigstens zwei, insbesondere wenigstens drei, besonders bevorzugt wenigstens vier, plattenförmige Rahmenelemente auf. Die plattenförmigen Rahmenelemente sind dabei zwischen den Endplatten angeordnet, wobei die Endplatten eine vorderseitige und/oder rückseitige Kontaktfläche zur Anordnung an einem Rahmenelement aufweisen. Hierdurch kann die Vakuumkammer durch axiale Anordnung einer Vielzahl von Rahmenelementen, jedoch wenigstens zwei Rahmenelementen, mit abschließender Anordnung zweier Endplatten an axial gegenüberliegenden Seiten des Verbundes von Rahmenelementen gebildet werden. In dieser Anordnung werden die Teilvolumina der Rahmenelemente zu einem Gesamtvolumen der Vakuumkammer summiert. Das Gesamtvolumen wird dabei in Umfangsrichtung überwiegend, insbesondere vollständig, durch die Wandung der Rahmenelemente und in axialer Richtung überwiegend, insbesondere vollständig, durch die Endplatten begrenzt.

### Bevorzugte Weiterbildungen und Ausführungsformen

Bei einer bevorzugten Weiterbildung weist zumindest eine Endplatte einen Vorsprung auf, der einen Vorsprung-Innenbereich und eine umlaufende Wandung ausbildet, wodurch ein Teilvolumen der Vakuumkammer in Umfangsrichtung begrenzt wird. Der Fertigungsaufwand der Endplatten kann durch Wahl einer geeigneten Materialstärke der Platten-Rohlinge auf ein Minimum reduziert werden, wenn die Materialstärke der Platten-Rohlinge der Rahmendicke der Rahmenelemente entspricht. Beispielsweise kann in der Regel auf eine grobe Bearbeitung der Endplatten verzichtet werden, wenn die Materialstärke der Platten-Rohlinge der minimalen Rahmendicke der Rahmenelemente entspricht. Hierdurch wird eine gleichmäßige Festigkeit der Wandung bei minimalem Materialeinsatz erreicht.

Übersteigt die Materialstärke des Platten-Rohlings die Rahmendicke der Rahmenelemente, so kann bei zumindest einer Endplatte vorgesehen sein, den inneren Teil des Platten-Rohlings bis zu einer bestimmten Tiefe abzutragen. Die Endplatte bildet dabei einen axialen Vorsprung mit einer überwiegend umlaufenden Wandung aus. Der Innenbereich einer derart ausgeführten Endplatte wird dementsprechend durch die überwiegend umlaufende Wandung und über den nicht abgetragenen Teil der Endplatte in einer axialen Richtung begrenzt.

Bei einer bevorzugten Ausführungsform sind zumindest eine Endplatte, insbesondere beide Endplatten, und die wenigstens zwei Rahmenelemente miteinander verklebt. Hierdurch kann eine besonders kostengünstige und einfache Herstellung der Vakuumkammer erzielt werden. Insbesondere ist das Verkleben der zumindest einen Endplatte, insbesondere beider Endplatten, und der wenigstens zwei Rahmenelemente bei Verwendung von Platten-Rohlingen aus Glas geeignet. Durch Verkleben von lediglich einer Endplatte mit den wenigstens zwei Rahmenelementen kann die Vakuumkammer besonders einfach erweitert werden, da weitere Rahmenelemente zwischen dem bereits verklebten Verbund, bestehend aus einer Endplatte und wenigstens zwei Rahmenelementen und der weiteren Endplatte angeordnet werden können.

Besonders bevorzugt ist eine Ausführungsform, bei der zumindest eine vorderseitige Rahmen-Kontaktfläche eine umlaufende Rahmen-Ausnehmung, insbesondere in Form einer im Querschnitt trapezförmigen Nut, zur Anordnung eines Dichtmittels aufweist. Eine umlaufende Rahmenausnehmung ist in Bezug auf die Positionierung eines Dichtmittels an der Kontaktfläche sowie die Bereitstellung eines Quetschbereiches für das Dichtmittel bei Anordnung eines weiteren Rahmenelements oder einer Endplatte besonders günstig. Die Rahmen-Ausnehmung kann einen beliebigen Querschnitt aufweisen. Im Sinne einer kostengünstigen und einfachen Herstellung eignet sich eine Rahmen-Ausnehmung, die in nur einem Bearbeitungsschritt fertigbar ist und daher einen rechteckigen Querschnitt ohne Hinterschneidung aufweist. Bei Ausbildung der Rahmen-Ausnehmung mit Hinterschneidung wird, bei Anordnung eines Dichtmittels, eine verbesserte Klemmwirkung der Rahmen-Ausnehmung erreicht. Die Rahmen-Ausnehmung weist dabei insbesondere einen trapezförmigen Querschnitt auf. Um die Dichtwirkung weiter zu steigern, können insbesondere weitere umlaufende Rahmen-Ausnehmungen zur Anordnung eines Dichtmittels vorgesehen sein.

Eine weitere bevorzugte Ausführungsform sieht vor, dass an der zumindest einen, vorderseitigen Rahmen-Kontaktfläche ein Dichtmittel, insbesondere ein O-Ring, der Vakuumkammer angeordnet ist. Das Dichtmittel dichtet den Innenbereich der Vakuumkammer gegen den Außenbereich ab. Das Dichtmittel kann besonders effektiv genutzt werden, wenn es zwischen zwei Rahmenelementen oder zwischen Rahmenelement und einer Endplatte angeordnet ist. Von besonderer Bedeutung ist der Einsatz eines Elastomers, insbesondere einer Gummierung, als Dichtmittel. In Kombination mit einer Rahmen-Ausnehmung ist die Ausbildung des Dichtmittels als Gummi-Ring, insbesondere O-Ring, besonders bevorzugt als Rechteck-Ring, besonders geeignet. In besonderer Ausgestaltung kann somit die Dichtwirkung an das Einsatzgebiet der Vakuumkammer angepasst werden. Im Weiteren sind auch komplexere Dichtmittel, beispielsweise eine Labyrinth-Dichtung denkbar.

Bei einer bevorzugten Ausführungsform weist zumindest eine rückseitige Rahmen-Kontaktfläche eine umlaufende Ausnehmung, insbesondere in Form einer im Querschnitt halbrunden Nut, zur Anordnung an einem Dichtmittel auf. Eine rückseitige Rahmen-Ausnehmung ermöglicht die teilweise Aufnahme des Dichtmittels und bewirkt dadurch ein Überlappen des, zwischen zwei Rahmenelementen oder zwischen Rahmenelement und Endplatte, bestehenden Spalts durch das Dichtmittel mit besonders günstiger Auswirkung auf die Dichtwirkung des Dichtmittels.

Weiterhin bevorzugt ist eine Ausführungsform, bei der die Rahmenelemente jeweils wenigstens zwei, insbesondere wenigstens drei, besonders bevorzugt wenigstens vier, Rahmen-Durchgangsausnehmungen zur Aufnahme eines Befestigungsmittels aufweisen. Die Rahmen-Durchgangsausnehmungen sind in axialer Richtung, quer zu einer plattenartigen Erstreckung des Rahmenelements, im Rahmenbereich ausgebildet und dienen der Aufnahme eines Befestigungsmittels zur Verbindung der Rahmenelemente und/oder der Endplatten. Besonders günstig hinsichtlich des Fertigungsaufwandes ist eine symmetrische Anordnung von zumindest zwei Befestigungsmitteln, insbesondere aller Befestigungsmittel, am Rahmenelement. Durch eine Erhöhung der Befestigungsmittelanzahl kann eine verbesserte Flächenpressung bei der Verbindung der Rahmenelemente und/oder Endplatten erreicht werden, was sich besonders günstig auf die Dichtwirkung auswirkt. Die Rahmen-Durchgangsausnehmungen können zudem insbesondere ein Gewinde aufweisen, um eine schraubbare Verbindung zu ermöglichen. Das Gewinde kann dabei im Rahmenelement ausgebildet sein oder an der Rahmen-Durchgangsausnehmung angeordnet sein. Eine Anordnung des Gewindes in der Rahmen-Durchgangsausnehmung kann dabei beispielsweise mittels einer Gewindehülse erfolgen.

Bei einer bevorzugten Weiterbildung fluchten zumindest zwei Rahmen-Durchgangsausnehmungen mit Rahmen-Durchgangsausnehmungen wenigstens eines angrenzenden Rahmenelements. Eine derartige Anordnung der Rahmen-Durchgangsausnehmungen ermöglicht eine besonders günstige Verbindung der Rahmenelemente mittels einer vollständigen oder teilweisen Durchsteckverbindung. Beispielsweise könnte ein Befestigungsmittel durch eine Rahmenelement-Durchgangsausnehmung eines ersten Rahmenelements und durch eine zweite Rahmenelement-Durchgangsausnehmung eines zweiten Rahmenelements hindurchgesteckt werden, um in einer dritten Rahmenelement-Durchgangsausnehmung eines dritten Rahmenelements schließlich befestigt zu werden. Verschiedenste Kombinationen sind dabei denkbar.

Weiterhin bevorzugt ist eine Ausführungsform, bei der wenigstens eine Endplatte wenigstens zwei, insbesondere wenigstens drei, besonders bevorzugt wenigstens vier, Endplatten-Ausnehmungen, insbesondere Endplatten-Durchgangsausnehmungen, zur Aufnahme eines Befestigungsmittels aufweist. Hierdurch kann zur Fertigung der Endplatten eine zur Fertigung der Rahmenelemente analoge Vorgehensweise angewendet werden, was sich besonders günstig auf den Fertigungsprozess der Vakuumkammer auswirkt.

Eine bevorzugte Weiterbildung sieht vor, dass zumindest zwei Endplatten-Ausnehmungen, insbesondere Endplatten-Durchgangsausnehmungen, mit Rahmen-Durchgangsausnehmungen eines angrenzenden Rahmenelements, insbesondere mit Rahmen-Durchgangsausnehmungen aller Rahmenelemente, fluchten. Hierdurch kann der Fertigungsprozess aller Rahmenelemente und Endplatten zu einem großen Anteil vereinheitlicht werden. Weiterhin lassen sich die Rahmenelemente und Endplatten in besonders einfacher Weise miteinander verbinden. Insbesondere durch Fluchten der wenigstens zwei Endplatten-Durchgangsausnehmungen mit Rahmen-Durchgangsausnehmungen aller Rahmenelemente lassen sich die Rahmenelemente besonders einfach zu einer Vakuumkammer verbinden.

Bevorzugt ist eine Weiterbildung, bei der wenigstens eine Endplatten-Ausnehmung, insbesondere eine Endplatten-Durchgangsausnehmung, ein Gewinde aufweist. Das Gewinde kann dabei in der Endplatte ausgebildet sein oder an der Endplatten-Durchgangsausnehmung angeordnet sein. Eine Anordnung des Gewindes in der Endplatten-Durchgangsausnehmung kann dabei beispielsweise mittels einer Gewindehülse erfolgen. Hierdurch lässt sich die Verbindung der Endplatte besonders günstig mittels einer Verschraubung herstellen.

Bei einer bevorzugten Weiterbildung sind die wenigstens zwei Rahmenelemente und die zwei Endplatten durch wenigstens zwei Befestigungsmittel, insbesondere durch eine Schraubverbindung, zusammengepresst miteinander verbunden.

Eine bevorzugte Ausführungsform sieht vor, dass zumindest eine Endplatte wenigstens eine Durchgangsausnehmung aufweist, die das Kammerinnere mit dem Kammeräußeren fluidisch verbindet und eine Anschlussmöglichkeit für eine Leitung aufweist.

Besonders bevorzugt ist eine Ausführungsform, bei der zumindest eine Endplatte einen öffenbaren Teilbereich, insbesondere einen Türflansch mit daran angeordneter Türe, aufweist. Über einen öffenbaren Teilbereich ist die Vakuumkammer ohne Demontage zu Wartungszwecken oder zur Bestückung mit Gegenständen besonders einfach zugänglich. Der öffenbare Teilbereich ermöglicht dabei besonders bevorzugt den ungehinderten Eingriff in die Vakuumkammer über die Fläche des gesamten Rahmen-Innenbereich, des dahinterliegenden Rahmenelements. Mit anderen Worten ist der öffenbare Teilbereich der Endplatte dann zumindest gleich groß wie der dahinterliegende Rahmen-Innbereich des Rahmenelements.

Bei einer bevorzugten Weiterbildung weist der öffenbare Teilbereich, insbesondere die am Türflansch angeordnete Türe, ein Sichtfenster auf. Ein Sichtfenster ermöglicht dabei Einsicht in die Vakuumkammer während sich diese im Betrieb befindet.

Eine Ausführungsform sieht vor, dass der lichte Querschnitt des Rahmen-Innenbereichs der zumindest zwei Rahmenelemente, insbesondere die überwiegenden Anzahl der Rahmenelemente, besonders bevorzugt aller Rahmenelemente, gleich ist.

Bei einer bevorzugten Ausführungsform sind die zumindest zwei Rahmenelemente, insbesondere die überwiegende Anzahl der Rahmenelemente, vorzugsweise alle Rahmenelemente, gleich, insbesondere identisch, ausgebildet. Durch Angleichung der Rahmenelemente zueinander wird die Anzahl der Gleichteile in der Fertigung erhöht. Hierdurch kann die Produktion besonders kostengünstig und effizient erfolgen. Zudem wird die Erweiterung der Vakuumkammer besonders einfach durch eine Vergrößerung der Anzahl an Rahmenelementen ermöglicht. Dabei muss bei Gleichgestaltung der Rahmelemente hinsichtlich deren Kompatibilität untereinander sowie der Anordnungsreihenfolge keine Beachtung beigemessen werden.

Eine bevorzugte Ausführungsform sieht vor, dass die Rahmendicke der wenigstens zwei Rahmenelemente in umlaufender Richtung variiert. Hierdurch kann die Festigkeit der Rahmenelemente gezielt an die Umgebungsbedingungen der Vakuumkammer angepasst werden. Beispielsweise kann ein Teilbereich der Wandung der Rahmenelemente breiter oder schmaler ausgeführt werden.

Bei einer bevorzugten Weiterbildung, ist die Rahmendicke des unteren Rahmenteils der wenigstens zwei Rahmenelemente, in einer bestimmungsgemäßen Einbaulage der Vakuumkammer, größer als die Rahmendicke der übrigen Rahmenteile. Hierdurch wird eine besonders feste Bodenplatte der Vakuumkammer ausgebildet.

Bevorzugt ist eine Ausführungsform, bei der eine Endplatte mit wenigstens einem Außenmaß die wenigstens zwei Rahmenelemente und die andere Endplatte überragt, um eine axiale Anschlagfläche auszubilden. Die Anschlagfläche eignet sich dabei in besonders günstiger Weise als Positionierungshilfe der Vakuumkammer, wenn diese in einer komplementären Aufnahme angeordnet werden soll.

Eine bevorzugte Ausführungsform sieht vor, dass die wenigstens zwei Rahmenelemente und/oder die zwei Endplatten in ihrer Außenkontur überwiegend rechteckig, insbesondere quadratisch, ausgebildet sind. Die Formgebung der Außenkontur richtet sich in besonders günstiger Weise nach der Form der verwendeten Platten-Rohlinge, da hierdurch der geringste Materialabfall bei der Herstellung entsteht.

Bevorzugt ist eine Ausführungsform, bei der die wenigstens zwei Rahmenelemente einen überwiegend rechteckigen, insbesondere quadratischen, Innenbereich umrahmen. In Kombination mit einer rechteckigen, insbesondere quadratischen, Ausbildung der Außenkontur kann die Fertigung besonders materialeffizient erfolgen, da durch Ausfräsen einer Innenkontur eines ersten Rahmenelements im selben Arbeitsschritt bereits die Außenkontur eines nächstkleineren Rahmenelements entsteht. Hierdurch ist die Fertigung besonders effektiv durchführbar.

Die Rahmenelemente und Endplatten werden bevorzugt aus Aluminium, insbesondere aus Alugussplatten, gefertigt, da sich Aluminium in Bezug auf Gewicht und Fertigung als besonders vorteilhaft herausgestellt hat. Denkbar wäre außerdem, je nach Anforderung an die Vakuumkammer, die Verwendung anderer Materialien, insbesondere anderer Metalle oder Glas.

### Beschreibung des erfindungsgemäßen Verfahrens

Die Aufgabe wird weiterhin gelöst durch ein Verfahren zur Herstellung einer, insbesondere zuvor beschriebenen, Vakuumkammer mit zwei Endplatten und wenigstens zwei plattenförmigen Rahmenelementen, aufweisend die Verfahrensschritte:
A) Erstellen eines Rahmenelements aus einem Platten-Rohling;
G) Erstellen wenigstens eines weiteren Rahmenelements aus einem Platten-Rohling;
M) Verbinden der Endplatten und der Rahmenelemente zu einer Vakuumkammer.

Das erfindungsgemäße Verfahren kann vor, zwischen und/oder nach den angeführten Verfahrensschritten einen oder mehrere weitere Verfahrensschritte aufweisen.

Ein Werkzeug, insbesondere eine Fräsmaschine, erzeugt vorzugsweise in einem ersten Bearbeitungsschritt ein Rahmenelement aus einem Platten-Rohling. Der Platten-Rohling zur Erstellung des Rahmenelements ist insbesondere als Halbzeug mit Ausnehmung, besonders bevorzugt als Gussteil-Rahmen, ausgebildet. Eine bereits im Platten-Rohling ausgebildete Ausnehmung reduziert den Bearbeitungsaufwand des Platten-Rohlings und den bei der Bearbeitung entstehenden Materialabfall. Ein weiterer Verfahrensschritt sieht vor, wenigstens ein weiteres Rahmenelement, insbesondere analog zum Verfahrensschritt A) zu erstellen. Nach dem Erstellen der wenigstens zwei Rahmenelemente werden diese in einem, insbesondere letzten, Verfahrensschritt mit den Endplatten zu einer Vakuumkammer verbunden.

### Bevorzugte Weiterbildungen und Verfahrensschritte

Bevorzugt ist ein Verfahren mit dem Verfahrensschritt
B) Herausnahme eines Rahmen-Innenbereichs aus einem Platten-Rohling zur Erstellung eines Rahmenelements.

Ein Werkzeug, insbesondere eine Fräsmaschine, erzeugt vorzugsweise in einem ersten Bearbeitungsschritt des Platten-Rohlings lediglich die Innenkontur des Rahmenelements aus dem Platten-Rohling, wobei der innere Teil des Platten-Rohlings unbearbeitet bleibt. Mit anderen Worten wird ein rahmenartiger Teil aus dem Platten-Rohling geschnitten. Hierdurch kann dieser ausgefräste Teil für ein Rahmenelement einer, um die Rahmendicke reduzierten, kleineren Vakuumkammer weiterverwendet werden. Dieses Verfahren lässt sich bis zu einer unwirtschaftlichen Minimalgröße des Rahmenelements fortführen, sodass der Materialabfall auf ein Minimum reduziert wird.

Die Bearbeitung der Platten-Rohlinge kann wie angeführt mittels einer Fräsmaschine durchgeführt werden. Generell eignen sich auch andere Verfahren, beispielsweise Sägen, Laserschneiden, Hochdruckwasserstrahlschneiden usw. zur Herausnahme des Rahmen-Innenbereichs aus dem Platten-Rohling. Der Rahmen-Innenbereich entspricht dabei vorzugsweise dem ausgeschnittenen Innenteil des Platten-Rohlings inklusive der Fräserbahn.

Eine bevorzugte Weiterbildung des Verfahrens sieht einen Verfahrensschritt
C) Herausnahme einer umlaufenen Rahmen-Ausnehmung zur Anordnung eines Dichtmittels
vor. Zur Abdichtung eventueller Leckageöffnungen zwischen den Rahmenelementen und den Rahmenelementen und den Endplatten können Dichtmittel eingesetzt werden. In besonderer Ausgestaltung werden die Dichtmittel an einer umlaufenden Rahmen-Ausnehmung angeordnet. Besonders bevorzugt wird diese umlaufende Rahmen-Ausnehmung bereits während bzw. unmittelbar vor oder nach dem Herausnehmen des Rahmen-Innenbereichs aus dem Platten-Rohling, insbesondere mit dem gleichen Werkzeug, aus dem Rahmenelement herausgenommen. Dies birgt den Vorteil einer besonders einfachen Herstellung der Rahmenelemente.

Bevorzugt ist weiterhin ein Verfahren mit einem Verfahrensschritt
D) Herausnahme von wenigstens zwei, insbesondere wenigstens drei, besonders bevorzugt wenigstens vier, Rahmen-Durchgangsausnehmungen.

Ein dem Verfahrensschritt A) unmittelbar vor- oder nachgelagerter Verfahrensschritt der Herausnahme von Rahmen-Durchgangsausnehmungen ermöglicht die präzise Anordnung der Rahmen-Durchgangsausnehmungen im Rahmenelement, da die erneute Positionierung des Rahmenelements in einer Werkzeugvorrichtung entfällt. Somit kann die Produktionsgenauigkeit weiter erhöht werden. Es kann alternativ vorgesehen sein, die Rahmen-Durchgangsausnehmungen zu einem späteren Zeitpunkt des Verfahrens im Verbund mit anderen Rahmenelementen und Endplatten auszunehmen. Dadurch kann die Ausrichtung der Ausnehmungen zueinander besonders genau erfolgen.

Bei einer bevorzugten Weiterbildung beinhaltet das Verfahren einen Schritt
E) Herausnahme von zumindest einer Ausnehmung am Rahmenelement zur fluidischen Verbindung des Rahmen-Innenbereichs mit dem Äußeren im montierten Zustand der Vakuumkammer.

Je nach Ausführungsform des Rahmenelements kann vorgesehen sein, eine Verbindung in Form eine Durchgangsausnehmung in Erstreckungsrichtung des Rahmenelements am Rahmenelement auszubilden. Hierbei ist es besonders günstig, die Ausnehmung während bzw. unmittelbar vor oder nach der Herausnahme des Rahmen-Innenbereichs, insbesondere mit dem gleichen Werkzeug, herauszunehmen.

Bevorzugt ist weiterhin ein Verfahren mit dem Verfahrensschritt
F) Oberflächenbearbeitung des erstellten Rahmenelements.

Die Oberflächenbearbeitung des entstandenen Rahmenelements begünstigt die anschließende und möglichst toleranzfreie Fügung der Rahmenelemente. Besonders günstig ist daher, im Anschluss an die grobe Bearbeitung des Rahmenelements eine feinere Oberflächenbearbeitung anzuschließen, um eine erneute Positionierung des Rahmenelements zu einem späteren Zeitpunkt zu vermeiden.

Weiterhin bevorzugt ist das Verfahren mit dem Verfahrensschritt
H) Herausnahme einer Ausnehmung aus einem Platten-Rohling zur Erstellung einer Endplatte mit axialem Vorsprung;
Hierdurch kann sowohl die Herstellung von Rahmenelementen als auch die Herstellung von Endplatten mit dem gleichen Werkzeug erfolgen.

Eine bevorzugte Weiterbildung sieht den Verfahrensschritt
I) Erstellung einer Endplatte durch Herausnahme einer umlaufenden Endplatten-Ausnehmung zur Anordnung eines Dichtmittels vor.

Zur Abdichtung eventueller Leckageöffnungen zwischen den Rahmenelementen und den Endplatten können Dichtmittel eingesetzt werden. In besonderer Ausgestaltung werden die Dichtmittel an einer umlaufenden Endplatten-Ausnehmung angeordnet. Besonders bevorzugt wird diese umlaufende Endplatten-Ausnehmung bereits während bzw. unmittelbar vor oder nach dem Herausnehmen einer Ausnehmung zur Erstellung eines axialen Vorsprungs aus dem Platten-Rohling, insbesondere mit dem gleichen Werkzeug, aus der Endplatte herausgenommen. Dies birgt den Vorteil einer besonders einfachen Herstellung der Endplatte.

Bei einer bevorzugten Weiterbildung ist der Verfahrensschritt
J) Herausnahme von wenigstens zwei, insbesondere wenigstens drei, besonders bevorzugt wenigstens vier, Endplatten-Ausnehmungen
vorgesehen. Ein an einen Verfahrensschritt zur Herstellung der Endplatte unmittelbar vor- oder nachgelagerter Verfahrensschritt der Herausnahme von Endplatten-Ausnehmungen, insbesondere Endplatten-Durchgangsausnehmungen, ermöglicht die präzise Anordnung der Endplatten-Ausnehmungen an der Endplatte, da die erneute Positionierung der Endplatte in einer Werkzeugvorrichtung entfällt. Somit kann die Produktionsgenauigkeit weiter erhöht werden. Es kann alternativ vorgesehen sein, die Endplatten-Ausnehmungen zu einem späteren Zeitpunkt des Verfahrens im Verbund mit anderen Rahmenelementen und einer weiteren Endplatten auszunehmen. Dadurch kann die Ausrichtung der Ausnehmungen zueinander besonders genau erfolgen.

Ein bevorzugtes Verfahren enthält den Verfahrensschritt
K) Oberflächenbearbeitung der erstellten Endplatte.

Ein an die Erstellung der Endplatte unmittelbar folgender Verfahrensschritt zur Oberflächenbearbeitung reduziert Fertigungstoleranzen und ermöglicht eine bessere Fügung der Endplatte bei der Montage der Vakuumkammer.

Weiterhin bevorzugt ist ein Verfahren mit dem Verfahrensschritt
L) Verwendung des herausgenommenen Rahmen-Innenbereichs zur Erstellung einer nächstkleineren Endplatte oder eines nächstkleineren Rahmenelements.

Durch die Weiterverwendung des herausgenommenen Rahmen-Innenbereichs bei der Herstellung eines Rahmenelements kann der Materialeinsatz bei der Herstellung der Vakuumkammer weiter reduziert werden. Der herausgenommene Rahmen-Innenbereich wird dabei zur Herstellung eines nächstkleineren Rahmenelements und/oder einer nächstkleineren Endplatte für eine nächstkleinere Vakuumkammer verwendet.

Weiterhin ist in einem eigenständigen Aspekt der Erfindung ein Verfahren zur Herstellung einer Endplatte und/oder eines Rahmenelements für eine Vakuumkammer mit einer aufeinander folgenden Herausnahme von Rahmenelementen aus einem Platten-Rohling vorgesehen. Hierdurch kann ein Platten-Rohling besonders wirtschaftlich genutzt werden, da der herausgenommene Rahmen-Innenbereich zur Herstellung eines weiteren, nächstkleineren Rahmenelements oder einer nächstkleineren Endplatte genutzt werden kann. Das Verfahren kann dabei bis zu einer unwirtschaftlichen Minimalgröße des resultierenden Rahmen-Innenbereichs fortgesetzt werden. Weiterhin kann dieses Verfahren in beliebiger Kombination mit den hier beschriebenen Verfahrensschritten durchgeführt werden.

Unter einem "plattenartigen" bzw. "plattenförmigen Rahmenelement" wird ein zumindest ein Teilvolumen der Vakuumkammer begrenzendes Element verstanden, wobei die Erstreckung des Elements hauptsächlich durch in einer durch die Haupterstreckungsrichtungen aufgespannten Ebene erfolgt und wobei das begrenzte Teilvolumen innerhalb dieser Ebene oder in zu dieser Ebene parallelen Ebenen liegt.

Das plattenartige bzw. plattenförmige Rahmenelement besteht aus einem einzelnen Platten-Rohling, wobei das plattenartige bzw. plattenförmige Rahmenelement in allen Erstreckungsrichtungen gleich oder kleiner den Abmessungen des Platten-Rohlings ist. Bevorzugt entspricht der Platten-Rohling in seinen Außenabmessungen den Außenabmessungen des zu fertigenden Rahmenelements.

Die Rahmenelemente weisen ein Erstreckungsverhältnis von Rahmenelement-Stärke bzw. Platten-Rohling-Stärke zur minimalen Erstreckung in einer der ebenen Erstreckungsrichtungen von 1 zu 3, insbesondere 1 zu 5, besonders bevorzugt von 1 zu 10, auf.

Die Rahmenelemente werden bevorzugt in einer Richtung quer zu den Haupterstreckungsrichtungen bzw. quer zur plattenartigen Erstreckung, insbesondere senkrecht zur Ebene des Platten-Rohlings aneinander aufgereiht angeordnet.

Die Haupterstreckungsrichtungen - bzw. die ebene/plattenartige Erstreckung - des Rahmenelements entsprechen den Haupterstreckungsrichtungen - bzw. der ebenen Erstreckung - des Platten-Rohlings.

Die Wandung des Rahmen-Innenbereichs ist in einem Winkel zwischen 45 bis 90°, insbesondere zwischen 60 bis 90°, besonders bevorzugt in einem Winkel zwischen 80 bis 90°, zur ebenen Erstreckung des Rahmenelements ausgebildet.

Bevorzugt sind die Rahmenelemente einstückig.

Die Endplatten weisen eine umlaufende Kontaktfläche auf.

Bevorzugt befindet sich die umlaufende Kontaktfläche der Endplatte überwiegend, insbesondere vollflächig, im unmittelbaren und/oder durch ein Dichtelement, insbesondere in Form eines Elastomers, besonders bevorzug in Form eines Gummi-O-Rings, hergestellten Kontakt mit der umlaufenden Kontaktfläche des Rahmenelements.

Besonders bevorzugt wird das weitere Rahmenelement in dem Verfahrensschritt G) durch Herausnahme eines weiteren Rahmen-Innenbereichs durch das Werkzeug hergestellt.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine perspektivische Ansicht einer Ausführungsform einer erfindungsgemäßen Vakuumkammer;
- Fig. 2: zeigt eine Rückansicht auf die Vakuumkammer aus Fig. 1;
- Fig. 3: zeigt eine Vorderansicht auf die Vakuumkammer aus Fig. 1;
- Fig. 4: zeigt eine geschnittene Seitenansicht der Vakuumkammer entlang der Linie A-A aus Fig. 3;
- Fig. 5: zeigt einen Ausschnitt X der Vakuumkammer aus Fig. 4;
- Fig. 6: zeigt ein Rahmenelement der Vakuumkammer aus den Fign. 1 bis 5;
- Fig. 7: zeigt einen erfindungsgemäßen Verfahrensschritt zur Herstellung einer Endplatte und/oder eines Rahmenelements.

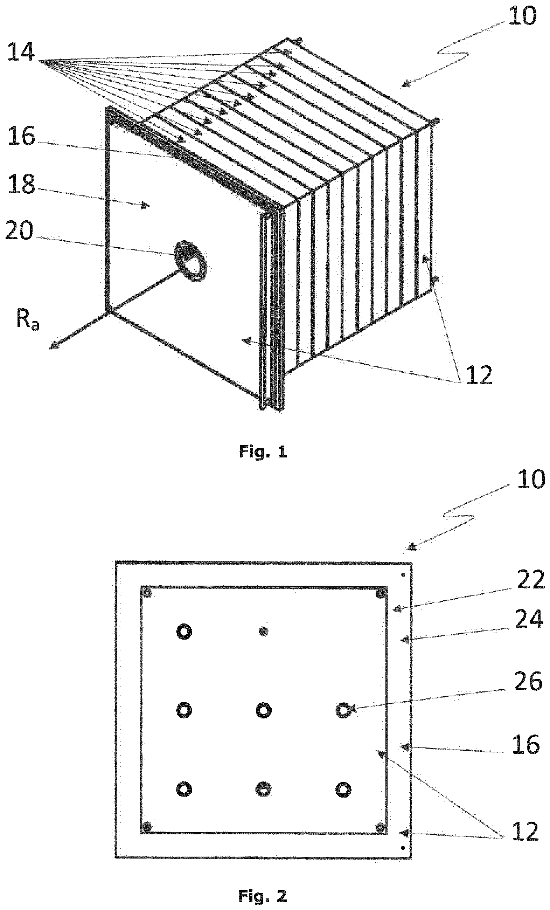

**Fig. 1** zeigt eine perspektivische Ansicht einer Ausführungsform einer erfindungsgemäßen Vakuumkammer **10** mit zwei eckigen Endplatten **12** und zehn eckigen, plattenförmigen Rahmenelementen **14.** Die plattenförmigen Rahmenelemente 14 sind zwischen den Endplatten 12 in axialer Richtung **Rₐ** - mit anderen Worten in einer Richtung quer zur plattenförmigen Erstreckung der Rahmenelemente 14 und Endplatten 12 - angeordnet. Eine Endplatte 12 weist einen Türflansch **16** mit daran angeordneter Türe **18** auf. Die Türe 18 weist ein Sichtfenster **20** auf.

**Fig. 2** zeigt eine Rückansicht auf die Vakuumkammer 10 aus Fig. 1. Die in axialer Richtung Rₐ (siehe Fig. 1) vordere, als Türflansch 16 ausgebildete, Endplatte 12 überragt dabei die hintere Endplatte 12 und die dazwischen liegenden Rahmenelemente 14 (siehe Fig. 1) in ihren Außenmaßen. Dadurch bildet eine rückseitige Endplatten-Kontaktfläche **22** eine Anschlagfläche **24** in axialer Richtung Rₐ (siehe Fig. 1) aus, mit der die Vakuumkammer 10 besonders einfach in einer Aufnahme bestimmungsgemäß positioniert werden kann. Die in axialer Richtung Rₐ (siehe Fig. 1) hintere Endplatte 12 weist mehrere, insbesondere acht, Durchgangsausnehmungen **26** auf, die das Innere der Vakuumkammer 10 mit dem Äußeren verbinden. Über diese Durchgangsausnehmungen 26 können für den Betrieb der Vakuumkammer 10 bzw. zur Durchführung bestimmter Verfahren die erforderlichen Gerätschaften angeschlossen werden. Aus Gründen der Übersichtlichkeit wurde nur eine Durchgangsausnehmung 26 mit einem Bezugszeichen versehen.

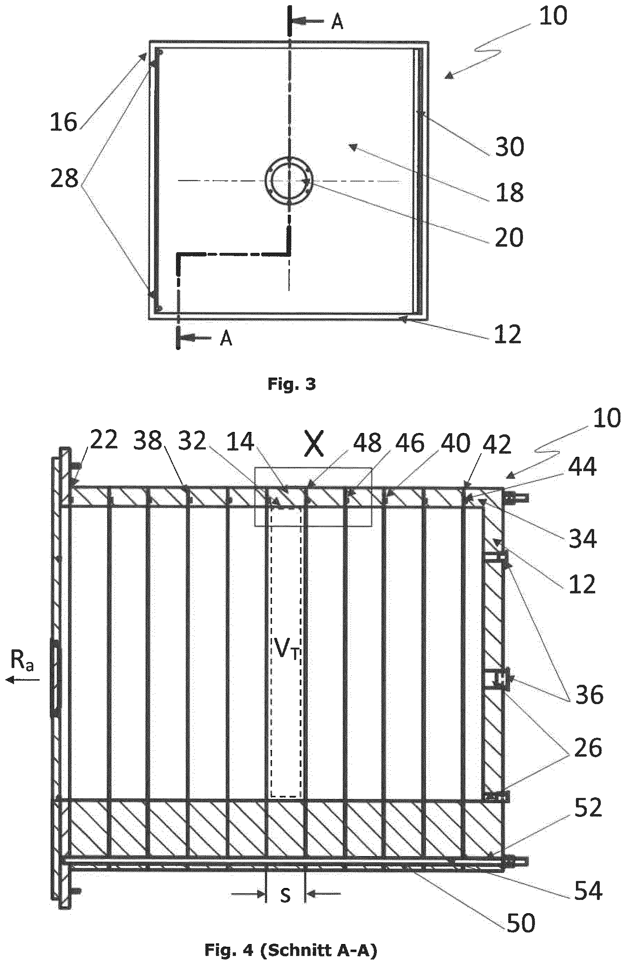

**Fig. 3** zeigt eine Vorderansicht auf die Vakuumkammer 10. Das Sichtfenster 20 ist dabei mittig in der Türe 18 angeordnet. Die Türe 18 ist über zwei Scharniere **28** am Türflansch 16 befestigt und weist einen Griff **30** auf. Türflansch 16 und Türe 18 sowie Türe 18 und Sichtfenster 20 sind in ihrer Anordnung zueinander abgedichtet (nicht gezeigt).

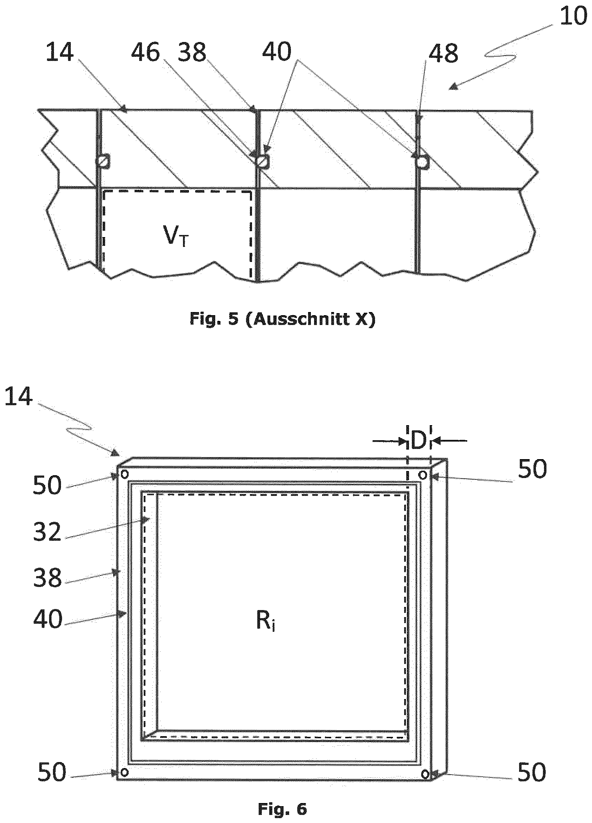

**Fig. 4** zeigt eine entlang der Schnittmarkierung **A-A** aus Fig. 3 geschnittene Seitenansicht der Vakuumkammer 10. Die Rahmenelemente 14, von denen der Übersichtlichkeit wegen nur eines mit einem Bezugszeichen versehen ist, bilden eine umfänglich überwiegend geschlossene und umlaufende Wandung **32** aus, die den Rahmen-Innenbereich **Rᵢ** (siehe Fig. 6) umrahmt. Die umlaufende Wandung 32 begrenzt in Kombination mit der Rahmenstärke **S** in Umfangsrichtung ein Teilvolumen **V_{T}** der Vakuumkammer 10. Durch axiale Anordnung der Rahmenelemente 14 entsteht so ein Gesamtvolumen der Vakuumkammer 10, welches durch die Endplatten 12 überwiegend in axialer Richtung Rₐ begrenzt wird.

Die Vakuumkammer 10 weist eine Endplatte 12 auf, die einen axialen Vorsprung **34** mit einer überwiegend umlaufenden Wandung ausbildet. Der Innenbereich einer derart ausgeführten Endplatte 12 wird zusätzlich zur axialen Wandung durch die in Umfangsrichtung umlaufende Wandung des Vorsprungs 34 begrenzt. Die Endplatte 12 weist außerdem die Durchgangsausnehmungen 26 und Leitungsanschlüsse **36** auf. Diese ermöglichen den leckagefreien Anschluss von für den Betrieb der Vakuumkammer bzw. die Durchführung spezieller Verfahren benötigten Gerätschaften.

Die Rahmenelemente 14 weisen an den umlaufenden vorderseitigen Rahmen-Kontaktflächen **38** eine umlaufende Rahmen-Ausnehmung **40** und eine Endplatte 12 weist an der vorderseitigen Endplatten-Kontaktfläche **42** eine umlaufende Endplatten-Ausnehmung **44** auf. Sowohl an den umlaufenden Rahmen-Ausnehmungen 40 als auch vorzugsweise an der umlaufenden Endplatten-Ausnehmung 44 ist ein Dichtmittel **46** zwischen den Rahmenelementen 14 bzw. zwischen Rahmenelement 14 und Endplatte 12 angeordnet. Die Endplatten 12 und Rahmenelemente 14 sind über die vorderseitigen und rückseitigen Kontaktflächen 38, **48,** 42 und 22 in axialer Richtung Rₐ aneinander angeordnet.

Die Rahmenelemente 14 weisen, vorzugsweise vier, Rahmen-Durchgangsausnehmungen **50,** die Endplatte 12 und der Türflansch 16 jeweils, vorzugsweise vier, Endplatten-Ausnehmungen **52** auf, welche mit den jeweils anderen Ausnehmungen fluchten. Weiterhin sind, vorzugsweise vier, Befestigungsmittel **54** an den Rahmenelementen 14 und den Endplatten 12 angeordnet, um diese miteinander zu verpressen. Die Montage der Vakuumkammer 10 ist auf diese Art besonders kostengünstig und einfach durchzuführen, da die Rahmenelemente 14 und die Endplatten 12 übereinander angeordnet werden können und anschließend die Befestigungsmittel 54 an dem Gesamtverbund angeordnet werden können. Denkbar wäre jedoch ebenso, dass verschiedene Teileverbunde durch Befestigungsmittel 54 vorgefertigt werden und anschließend die Teilverbunde zu einer gesamtheitlichen Vakuumkammer 10 verbunden werden.

**Fig. 5** zeigt einen vergrößerte Ausschnitt X der Fig. 4. Ein O-Ring 46 ist dabei zwischen zwei Rahmenelementen 14 angeordnet. Die Rahmenelemente 14 weisen an ihrer vorderseitigen Kontaktfläche 38 die, insbesondere als Nut ausgebildete, umlaufende Rahmen-Ausnehmung 40 zur Aufnahme des O-Rings 46 auf. Die umlaufende Rahmen-Ausnehmung 40 ist in ihrem Querschnitt vorzugsweise trapezförmig ausgebildet, um einen optimalen Sitz des O-Rings 46 zu gewährleisten.

**Fig. 6** zeigt ein einzelnes Rahmenelement 14 der in den Figuren 1 bis 4 gezeigten Vakuumkammer 10 mit vier Rahmen-Durchgangsausnehmungen 50. Die umlaufende Wandung 32 rahmt den Rahmen-Innenbereich Rᵢ. Eine Rahmendicke **D** bestimmt die Wandstärke der Vakuumkammer 10. Das Rahmenelement 14 hat eine in Umfangsrichtung variierende Rahmendicke D. Während das Rahmenelement 14 in Einbaulage an den seitlichen Teilen und dem oberen Teil des Rahmenelements 14 eine gleichbleibende Rahmendicke D aufweist, ist die Rahmendicke D am unteren Teil des Rahmenelements 14 verstärkt, um eine solide Bodenplatte auszubilden.

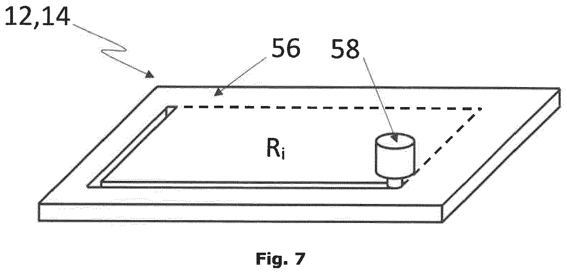

**Fig. 7** zeigt einen Verfahrensschritt zur Herstellung eines erfindungsgemäßen Rahmenelements 14 oder einer erfindungsgemäßen Endplatte 12. Der Rahmen-Innenbereich Rᵢ eines Platten-Rohlings **56** wird mittels eines Werkzeugs **58,** insbesondere einem Fräser, herausgenommen. Der so entstandene Rahmen-Innenbereich Rᵢ dient im weiteren Verfahren als Platten-Rohling 56 für ein nächstkleineres Rahmenelement 14 oder eine nächstkleinere Endplatte 12.

Durch Vornahme einer Zusammenschau aller Figuren der Zeichnung betrifft die Erfindung eine erweiterbare Vakuumkammer 10 mit flachen Rahmenelementen 14 und Endplatten 12 sowie ein Verfahren zur Herstellung einer solchen Vakuumkammer 10. Die Endplatten 12 sind in axialer Richtung Rₐ vor und hinter den Rahmenelementen 14 aufgereiht und begrenzen im Verbund mit den Rahmenelementen 14 ein Kammervolumen der Vakuumkammer 10.

### Bezugszeichenliste

- 10: Vakuumkammer
- 12: Endplatte
- 14: plattenförmiges Rahmenelement
- 16: Türflansch
- 18: Türe
- 20: Sichtfenster
- 22: rückseitige Endplatten-Kontaktfläche
- 24: Anschlagfläche
- 26: Durchgangsausnehmung
- 28: Scharnier
- 30: Griff
- 32: umlaufende Wandung
- 34: Vorsprung
- 36: Leitungsanschluss
- 38: vorderseitige Rahmen-Kontaktfläche
- 40: umlaufende Rahmen-Ausnehmung
- 42: vorderseitige Endplatten-Kontaktfläche
- 44: umlaufende Endplatten-Ausnehmung
- 46: Dichtmittel
- 48: rückseitige Rahmen-Kontaktfläche
- 50: Rahmen-Durchgangsausnehmung
- 52: Endplatten-Ausnehmung
- 54: Befestigungsmittel
- 56: Platten-Rohling
- 58: Werkzeug
- Rₐ: axiale Richtung
- Rᵢ: Rahmen-Innenbereich
- A-A: Schnittmarkierung
- X: Ausschnitt
- D: Rahmendicke
- S: Rahmenstärke
- V_{T}: Teilvolumen

## Patentansprüche

1. Vakuumkammer (10) mit zwei Endplatten (12) und wenigstens zwei flachen, effektiv zweidimensionalen, plattenartigen, plattenförmigen Rahmenelementen (14), wobei die Rahmenelemente (14) jeweils
- umfänglich überwiegend geschlossen sind; und
- einen Rahmen-Innenbereich (Rᵢ) mit einer umlaufenden Wandung (32) ausbilden;
- wodurch ein Teilvolumen (V_{T}) der Vakuumkammer (10) in Umfangsrichtung begrenzt wird; und
- eine umlaufende vorderseitige Rahmen-Kontaktfläche (38) zur Anordnung eines weiteren Rahmenelements (14) oder einer Endplatte (12) aufweisen; und
- eine umlaufende rückseitige Rahmen-Kontaktfläche (48) zur Anordnung eines weiteren Rahmenelements (14) oder einer Endplatte (12) aufweisen; und wobei
- die wenigstens zwei plattenförmigen Rahmenelemente (14) zwischen den Endplatten (12) angeordnet sind; und wobei
- die zwei Endplatten (12) eine vorderseitige und/oder rückseitige Kontaktfläche (42; 22) zur Anordnung an einem Rahmenelement (14) aufweisen; und
- das Kammervolumen in überwiegend axialer Richtung (Rₐ) begrenzen.

2. Vakuumkammer nach Anspruch 1, wobei zumindest eine vorderseitige Rahmen-Kontaktfläche (38) eine umlaufende Rahmen-Ausnehmung (40), insbesondere in Form einer im Querschnitt trapezförmigen Nut, zur Anordnung eines Dichtmittels (46) aufweist.

3. Vakuumkammer nach Anspruch 1 oder 2, wobei an der zumindest einen, vorderseitigen Rahmen-Kontaktfläche (38) ein Dichtmittel (46), insbesondere ein O-Ring, der Vakuumkammer (10) angeordnet ist.

4. Vakuumkammer nach einem der vorhergehenden Ansprüche, wobei zumindest eine rückseitige Rahmen-Kontaktfläche (48) eine umlaufende Ausnehmung (40), insbesondere in Form einer im Querschnitt halbrunden Nut, zur Anordnung eines Dichtmittels (46) aufweist.

5. Vakuumkammer nach einem der vorhergehenden Ansprüche, wobei die Rahmenelemente (14) jeweils wenigstens zwei, insbesondere wenigstens drei, besonders bevorzugt wenigstens vier, Rahmen-Durchgangsausnehmungen (50) zur Aufnahme eines Befestigungsmittels (54) aufweisen.

6. Vakuumkammer nach Anspruch 5, wobei zumindest zwei Rahmen-Durchgangsausnehmungen (50) mit Rahmen-Durchgangsausnehmungen (50) wenigstens eines angrenzenden Rahmenelements (14) fluchten.

7. Vakuumkammer nach einem der vorhergehenden Ansprüche, wobei wenigstens eine Endplatte (12) wenigstens zwei, insbesondere wenigstens drei, besonders bevorzugt wenigstens vier, Endplatten-Ausnehmungen (52), insbesondere Endplatten-Durchgangsausnehmungen, zur Aufnahme eines Befestigungsmittels (54) aufweist.

8. Vakuumkammer nach Anspruch 7, wobei zumindest zwei Endplatten-Ausnehmungen (52), insbesondere Endplatten-Durchgangsausnehmungen, mit Rahmen-Durchgangsausnehmungen (50) eines angrenzenden Rahmenelements (14), insbesondere mit Rahmen-Durchgangsausnehmungen (50) aller Rahmenelemente (14), fluchten.

9. Vakuumkammer nach Anspruch 7 oder 8, wobei wenigstens eine Endplatten-Ausnehmung (52), insbesondere eine Endplatten-Durchgangsausnehmung, ein Gewinde aufweist.

10. Vakuumkammer nach Anspruch 8 oder 9, wobei die wenigstens zwei Rahmenelemente (14) und die zwei Endplatten (12) durch wenigstens zwei Befestigungsmittel (54), insbesondere durch eine Schraubverbindung, zusammengepresst miteinander verbunden sind.

11. Vakuumkammer nach einem der vorhergehenden Ansprüche, wobei zumindest eine Endplatte (12) einen öffenbaren Teilbereich, insbesondere einen Türflansch (16) mit daran angeordneter Türe (18), aufweist.

12. Vakuumkammer nach einem der vorhergehenden Ansprüche, wobei die zumindest zwei Rahmenelemente (14), insbesondere die überwiegende Anzahl der Rahmenelemente (14), vorzugsweise alle Rahmenelemente (14), gleich, insbesondere identisch, ausgebildet sind.

13. Vakuumkammer nach einem der vorhergehenden Ansprüche, wobei die Rahmendicke (D) der wenigstens zwei Rahmenelemente (14) in umlaufender Richtung variiert.

14. Vakuumkammer nach einem der vorhergehenden Ansprüche, wobei eine Endplatte (12) mit wenigstens einem Außenmaß die wenigstens zwei Rahmenelemente (14) und die andere Endplatte (12) überragt, um eine axiale Anschlagfläche (24) auszubilden.

15. Verfahren zur Herstellung einer Vakuumkammer (10), nach einem der vorhergehenden Ansprüche, mit zwei Endplatten (12) und wenigstens zwei plattenförmigen Rahmenelementen (14), aufweisend die Verfahrensschritte:
A) Erstellen eines Rahmenelements (14) aus einem Platten-Rohling (56) durch Herausnahme eines Rahmen-Innenbereichs (Rᵢ) durch ein Werkzeug (58);
G) Erstellen wenigstens eines weiteren Rahmenelements (14) aus einem weiteren Platten-Rohling (56) durch Herausnahme eines weiteren Rahmen-Innenbereichs (Rᵢ) durch das Werkzeug (58);
M) Verbinden der Endplatten (12) und der Rahmenelemente (14) zu einer Vakuumkammer (10).

## Claims

1. Vacuum chamber (10) having two end plates (12) and at least two flat, effectively two-dimensional, plate-like, plate-shaped frame elements (14), wherein the frame elements (14) each
- are predominantly circumferentially closed; and
- form a frame interior region (Rᵢ) having a circumferential wall (32);
- whereby a partial volume (V_{T}) of the vacuum chamber (10) is delimited in the circumferential direction; and
- comprise a circumferential front frame contact surface (38) for the arrangement of a further frame element (14) or an end plate (12); and
- comprise a circumferential rear frame contact surface (48) for the arrangement of a further frame element (14) or an end plate (12); and wherein
- the at least two plate-shaped frame elements (14) are arranged between the end plates (12); and wherein
- the two end plates (12) comprise a front and/or rear contact surface (42; 22) for arrangement on a frame element (14); and
- delimit the chamber volume in the predominantly axial direction (Rₐ).

2. Vacuum chamber according to claim 1, wherein at least one front frame contact surface (38) comprises a circumferential frame recess (40), in particular in the form of a groove having a trapezoidal cross section, for the arrangement of a sealing means (46).

3. Vacuum chamber according to either claim 1 or claim 2, wherein a sealing means (46), in particular an O-ring, of the vacuum chamber (10) is arranged on the at least one front frame contact surface (38).

4. Vacuum chamber according to any of the preceding claims, wherein at least one rear frame contact surface (48) comprises a circumferential recess (40), in particular in the form of a groove having a semicircular cross section, for the arrangement of a sealing means (46).

5. Vacuum chamber according to any of the preceding claims, wherein the frame elements (14) each comprise at least two, in particular at least three, particularly preferably at least four, frame through-recesses (50) for receiving a fastening means (54).

6. Vacuum chamber according to claim 5, wherein at least two frame through-recesses (50) are aligned with frame through-recesses (50) of at least one adjoining frame element (14).

7. Vacuum chamber according to any of the preceding claims, wherein at least one end plate (12) comprises at least two, in particular at least three, particularly preferably at least four, end plate recesses (52), in particular end plate through-recesses, for receiving a fastening means (54).

8. Vacuum chamber according to claim 7, wherein at least two end plate recesses (52), in particular end plate through-recesses, are aligned with frame through-recesses (50) of an adjoining frame element (14), in particular with frame through-recesses (50) of all frame elements (14).

9. Vacuum chamber according to either claim 7 or claim 8, wherein at least one end plate recess (52), in particular an end plate through-recess, comprises a thread.

10. Vacuum chamber according to either claim 8 or claim 9, wherein the at least two frame elements (14) and the two end plates (12) are pressed together and joined together by at least two fastening means (54), in particular by a screw connection.

11. Vacuum chamber according to any of the preceding claims, wherein at least one end plate (12) comprises an openable portion, in particular a door flange (16) having a door (18) arranged thereon.

12. Vacuum chamber according to any of the preceding claims, wherein the at least two frame elements (14), in particular the predominant number of frame elements (14), preferably all frame elements (14), are designed to be the same, in particular to be identical.

13. Vacuum chamber according to any of the preceding claims, wherein the frame width (D) of the at least two frame elements (14) varies in the circumferential direction.

14. Vacuum chamber according to any of the preceding claims, wherein an end plate (12) having at least one external dimension projects beyond the at least two frame elements (14) and the other end plate (12) in order to form an axial stop surface (24).

15. Method for producing a vacuum chamber (10) according to any of the preceding claims, having two end plates (12) and at least two plate-shaped frame elements (14), comprising the following method steps:
A) Creating a frame element (14) from a plate blank (56) by removing a frame interior region (Rᵢ) with a tool (58);
G) Creating at least one further frame element (14) from a further plate blank (56) by removing a further frame interior region (Rᵢ) with the tool (58);
M) Connecting the end plates (12) and the frame elements (14) to form a vacuum chamber (10).

## Revendications

1. Chambre à vide (10) comprenant deux panneaux d'extrémité (12) et au moins deux éléments aplatis d'encadrement (14) du type plaque, en forme de plaques à bidimensionnement effectif, sachant qu'à chaque fois, lesdits éléments d'encadrement (14)
- sont majoritairement fermés sur leur pourtour ; et
- donnent naissance à une zone intérieure d'encadrement (Rᵢ) munie d'une paroi périphérique (32) ;
- délimitant ainsi un volume partiel (V_{T}) de ladite chambre à vide (10) dans la direction du pourtour ; et
- sont dotés d'une surface périphérique antérieure de contact (38) de l'encadrement, en vue de l'implantation d'un élément supplémentaire d'encadrement (14) ou d'un panneau d'extrémité (12) ; et
- sont pourvus d'une surface périphérique postérieure de contact (48) de l'encadrement, en vue de l'implantation d'un élément supplémentaire d'encadrement (14) ou d'un panneau d'extrémité (12) ; et sachant que
- les deux éléments d'encadrement (14) en forme de plaques, à présence minimale, sont interposés entre les panneaux d'extrémité (12) ; et sachant que
- les deux panneaux d'extrémité (12) sont nantis d'une (de) surface(s) de contact (42 ; 22) antérieure et/ou postérieure, en vue de l'implantation sur un élément d'encadrement (14) ; et
- délimitent le volume de la chambre dans une direction (Rₐ) majoritairement axiale.

2. Chambre à vide selon la revendication 1, dans laquelle au moins une surface antérieure de contact (38) de l'encadrement présente un évidement périphérique (40) dudit encadrement revêtant, notamment, la forme d'une rainure de section transversale trapézoïdale, en vue de l'implantation d'un moyen d'étanchement (46).

3. Chambre à vide selon la revendication 1 ou 2, un moyen d'étanchement (46) de ladite chambre à vide (10), une bague torique en particulier, étant implanté(e) sur la surface antérieure de contact (38) de l'encadrement, à présence minimale.

4. Chambre à vide selon l'une des revendications précédentes, dans laquelle au moins une surface postérieure de contact (48) de l'encadrement comporte un évidement périphérique (40) revêtant, notamment, la forme d'une rainure de section transversale semi-circulaire, en vue de l'implantation d'un moyen d'étanchement (46).

5. Chambre à vide selon l'une des revendications précédentes, dans laquelle les éléments d'encadrement (14) sont respectivement munis d'au moins deux, notamment d'au mois trois et, avec préférence particulière, d'au moins quatre évidements (50) traversant l'encadrement, en vue de recevoir un moyen de fixation (54).

6. Chambre à vide selon la revendication 5, dans laquelle au moins deux évidements (50) traversant l'encadrement sont alignés avec des évidements (50), traversant l'encadrement, d'au moins un élément d'encadrement (14) limitrophe.

7. Chambre à vide selon l'une des revendications précédentes, dans laquelle au moins un panneau d'extrémité (12) comporte au moins deux, notamment au mois trois et, avec préférence particulière, au moins quatre évidements (52), notamment des évidements traversant lesdits panneaux d'extrémité, en vue de recevoir un moyen de fixation (54).

8. Chambre à vide selon la revendication 7, dans laquelle au moins deux évidements (52) des panneaux d'extrémité, en particulier des évidements traversant lesdits panneaux d'extrémité, sont alignés avec des évidements (50), traversant l'encadrement, d'un élément d'encadrement (14) limitrophe, notamment avec des évidements (50), traversant l'encadrement, de tous les éléments d'encadrement (14).

9. Chambre à vide selon la revendication 7 ou 8, dans laquelle au moins un évidement (52) des panneaux d'extrémité, en particulier un évidement traversant lesdits panneaux d'extrémité, est pourvu d'un filetage.

10. Chambre à vide selon la revendication 8 ou 9, dans laquelle les deux éléments d'encadrement (14) à présence minimale et les deux panneaux d'extrémité (12) sont reliés les uns aux autres avec compression mutuelle, notamment au moyen d'une liaison vissée, par l'intermédiaire d'au moins deux éléments de fixation (54).

11. Chambre à vide selon l'une des revendications précédentes, dans laquelle au moins un panneau d'extrémité (12) comporte une région partielle apte à l'ouverture, en particulier une bride (16) de porte sur laquelle une porte (18) est implantée.

12. Chambre à vide selon l'une des revendications précédentes, dans laquelle les deux éléments d'encadrement (14) à présence minimale, en particulier la majorité desdits éléments d'encadrement (14), de préférence tous les éléments d'encadrement (14), sont de réalisation semblable et notamment identique.

13. Chambre à vide selon l'une des revendications précédentes, dans laquelle l'épaisseur (D) des deux éléments d'encadrement (14), à présence minimale, varie dans la direction périphérique.

14. Chambre à vide selon l'une des revendications précédentes, dans laquelle un panneau d'extrémité (12) fait saillie au-delà des deux éléments d'encadrement (14) à présence minimale et au-delà de l'autre panneau d'extrémité (12), par au moins une cote extérieure, en vue de donner naissance à une surface de butée axiale (24).

15. Procédé de fabrication d'une chambre à vide (10) conforme à l'une des revendications précédentes, comprenant deux panneaux d'extrémité (12) et au moins deux éléments d'encadrement (14) en forme de plaques, incluant les étapes opératoires consistant à :
A) créer un élément d'encadrement (14) à partir d'une ébauche de plaque (56) par enlèvement, au moyen d'un outil (58), d'une zone intérieure d'encadrement (Rᵢ) ;
G) créer au moins un élément supplémentaire d'encadrement (14) à partir d'une ébauche de plaque (56) supplémentaire, par enlèvement, au moyen dudit outil (58), d'une zone intérieure d'encadrement (Rᵢ) supplémentaire ;
M) relier les panneaux d'extrémité (12) et les éléments d'encadrement (14), afin d'obtenir une chambre à vide (10).
